# EUROPÄISCHE PATENTSCHRIFT

(11) **EP 0 724 691 B1**
(45) Veröffentlichungstag und Bekanntmachung des Hinweises auf die Patenterteilung: **10.06.1998**
(21) Anmeldenummer: 94930958.7
(22) Anmeldetag: 18.10.1994
(51) Int. Cl.: F15D 1/12, B64C 21/10, F04D 29/68, F01D 5/14

(54) **OBERFLÄCHE EINES FLUIDUMSTRÖMTEN KÖRPERS**
SURFACE OF A BODY IMMERSED IN A FLUID FLOW
SURFACE D'UN CORPS AUTOUR DUQUEL S'ECOULE UN FLUIDE

(30) Priorität: 20.10.1993 DE 9316009 U
(43) Veröffentlichungstag der Anmeldung: 07.08.1996
(73) Patentinhaber: Moser, Josef, D-85435 Erding (DE)
(72) Erfinder: Moser, Josef, D-85435 Erding (DE)
(74) Vertreter: Laufhütte, Dieter, Dr.-Ing.
(86) Internationale Anmeldenummer: EP9403422
(87) Internationale Veröffentlichungsnummer: WO9511388

(56) Entgegenhaltungen:
- EP-A- 0 246 915
- WO-A-84/03867
- DE-A- 1 934 246
- DE-A- 3 609 541
- GB-A- 2 068 502
- US-A- 4 650 138

## Beschreibung

Die Erfindung betrifft eine Oberfläche eines fluidumströmten Körpers mit aus der Grundfläche vorstehenden Erhebungen gemäß dem Oberbegriff des Anspruchs 1. Ein solcher Körper ist aus Dokument WO,A,8403867 bekannt.

Es ist bereits bekannt, daß umströmte Körper, wie beispielsweise die Außenhaut von Flugzeugen mit feinen Wellen, d.h. entsprechenden aus der Grundfläche vorstehenden Erhebungen versehen sind. Hierdurch wird insgesamt eine strömungsgünstigere Oberfläche erhalten.

Andererseits ist es beispielsweise aus dem deutschen Gebrauchsmuster DE 90 13 099 U bekannt Rotoren zur Energieaufnahme aus einem strömenden Medium bzw. zur Energieabgabe an ein strömendes Medium in Wellenform vorzusehen. Durch die entsprechende Wellung des Rotors wird der Wirkungsgrad desselben wesentlich verbessert.

Aufgabe der vorliegenden Erfindung ist es nun, die Oberfläche eines fluidumströmten Körpers mit aus der Grundfläche vorstehenden Erhebungen noch strömungsgünstiger zu gestalten.

Erfindungsgemäß wird diese Aufgabe dadurch gelöst, daß bei einer Oberfläche mit aus der Grundfläche vorstehenden Erhebungen die Erhebungen in Draufsicht auf die Oberfläche jeweils von zwei Begrenzungslinien umrandet sind, von denen die eine Begrenzungslinie länger ist und eine größere Krümmung aufweist als die andere Begrenzungslinie, so daß sich die Querschnittsfläche eines Tragflügels ergibt. Die über die Oberfläche strei chende Strömung legt also auf der einen Seite der Erhebung einen weiteren Weg zurück als auf der anderen Seite. Die Erhebungen können nun derart nebeneinander angeordnet sein, daß jeweils neben einer Begrenzungslinie mit größerer Krümmung einer Erhebung eine Begrenzungslinie mit kleinerer Krümmung einer folgenden Erhebung liegt. Hierdurch entsteht ein Kanal, der einerseits von der vergleichsweise längeren und gekrümmteren Begrenzungsfläche der Erhebung begrenzt ist und andererseits von der kürzeren Begrenzungsfläche mit kleinerer Krümmung der nächstfolgenden Erhebung. Hierdurch wird ein Interferenzeffekt innerhalb der Grenzschicht des den Körper umströmenden Fluids erzielt. Je nach Ausrichtung der Krümmung der jeweiligen Erhebungen zueinander kann der Interferenzeffekt beeinflußt werden. Auch die Stärke der Krümmung und insbesondere der Unterschiede der Krümmung der jeweiligen Begrenzungslinien beeinflußt diesen Effekt.

Gemäß einer Ausgestaltung der Erfindung können mehrere Erhebungen hintereinander in Reihe angeordnet sein und mehrere Reihen von Erhebungen können nebeneinander liegen.

In den durch die Erhebungen gebildeten Reihen können die jeweiligen Begrenzungslinien mit größerer Krümmung der hintereinander liegenden Erhebungen in eine Richtung gerichtet sein.

Die Begrenzungslinie mit größerer Krümmung der hintereinander angeordneten Erhebungen kann jeweils abwechselnd in entgegengesetzte Richtungen weisen. Die Höhe der Erhebungen bei nebeneinander angeordneten Reihen von Erhebungen kann unterschiedlich sein. Weiterhin kann die Höhe von Erhebungen von hintereinander angeordneten Erhebungen unterschiedlich sein.

Die Erhebungen können zu ihrem von der Grundfläche wegweisenden Ende hin ebenfalls gekrümmt sein.

Die Oberfläche der Erhebungen, die der Grundfläche gegenüberliegt, kann parallel zur Grundfläche verlaufen oder schräg zur Grundfläche angestellt sein, während die seitlichen Begrenzungsflächen der Erhebungen jeweils senkrecht zur Grundfläche ausgerichtet sind.

Weiterhin kann die Oberfläche erste vergleichsweise hohe Erhebungen aufweisen, die eine Grobstruktur bilden und auf dieser Grobstruktur können wiederum vergleichsweise niedrige Erhebungen ausgebildet sein, die eine Feinstruktur bilden.

Diese Oberflächen können auf die fluidumströmten Körper als Außenhaut im Nachhinein aufgebracht werden. Grundsätzlich ist es aber auch möglich, daß der fluidumströmte Körper von Hause aus mit der erfindungsgemäßen Oberfläche geformt wird.

Grundsätzlich läßt sich die erfindungsgemäße Oberfläche bei allen umströmten Körpern bevorzugt anwenden. So ist insbesondere eine Verwendung bei Rotoren vorteilhaft, wobei bei diesen der Wirkungsgrad entsprechend verbessert wird. Diese Rotoren können einerseits zur Energieaufnahme aus einem strömenden Medium dienen, wie beispielsweise Windrotoren, Wasserturbinen, Dampfturbinen oder Rotoren in Gaszählern bzw. Wasserzählern. Rotoren zur Energieabgabe an ein strömendes Medium, wie Flugzeugpropeller, Schiffsschrauben, Flugzeugtriebwerksrotoren, Hubschrauberrotoren, Ventilatoren, Lüfterrotoren, Staubsaugerrotoren, Autolüfterrotoren und Rotoren in Klimaanlagen können auch die erfindungsgemäße Oberfläche aufweisen.

Während bei den Rotoren jeweils Wirkungsgradverbesserung der Rotoren erzielbar sind, kann bei Auskleidung der Oberfläche von Kanälen bzw. Schläuchen, die durchströmt werden, die durch die Durchströmung erzeugte Geräuschentwicklung vermindert werden. Derartige Kanäle können beispielsweise Wasserkanäle, Luftkanäle, Schläuche, Turbinenkanäle und ähnliches sein.

Wenn man die Außenhaut von Fahrzeugen mit der erfindungsgemäßen Oberfläche ausstattet, wird der Widerstandsbeiwert der umströmten Fahrzeuge vermindert. Hier kann also die Außenhaut von Schiffen, Flugzeugen, Segelflugzeugen, U-Booten, Autos, Bussen und Lkws von schnellfahrenden Zügen, wie dem ICE, Luftschiffen, Ballonen, Booten und Schlauchbooten, Surfbrettern, Fahrrädern und Raketen mit der erfindungsgemäßen Oberfläche versehen werden.

Auch feststehende umströmte Körper, wie Türme, Kamine, Hochhausfassaden lassen sich mit der erfindungsgemäßen Oberfläche versehen. Hier wird die bei der Umströmung entstehende Geräuschentwicklung vermindert.

Die Flugeigenschaften von Torpedos und Projektilen lassen sich auch durch die erfindungsgemäße Oberfläche verbessern. Die entsprechenden Strömungseigenschaften von Segeln für Segelschiffe, Fallschirmen Hängegleitern und Drachensegeler sind auch durch die erfindungsgemäße Oberfläche verbesserbar. Die erfindungsgemäße Oberfläche kann bei der Oberflächengestaltung von Rudern und Paddeln eingesetzt werden. Auch die Umströmung von Zelten und Planen kann durch die Oberfläche nach der Erfindung verbessert werden. Entsprechend gestaltete Ski und insbesondere Flugski lassen sich hinsichtlich ihrer Gleiteigenschaften bzw. Umströmungseigenschaften ebenfalls verbessern. Schließlich kann die erfindungsgemäße Oberfläche auch vorteilhaft als Reifenprofil für Flugzeugreifen und Autoreifen eingesetzt werden.

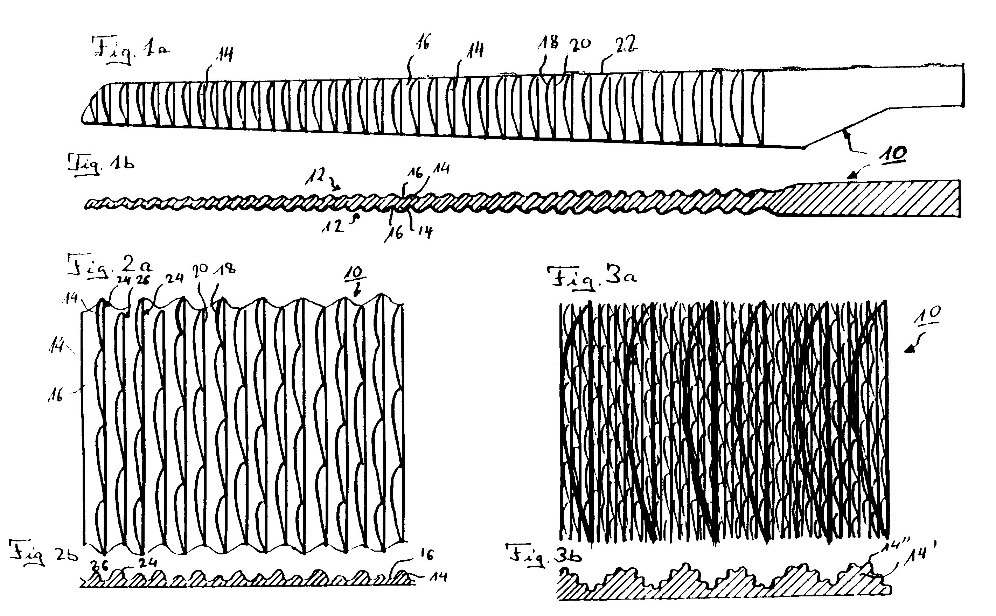

Bevorzugte Ausgestaltungen der erfindungsgemäßen Oberfläche werden anhand von mehreren Ausführungsbeispielen im folgenden näher erläutert. Es zeigen:
- Fig. 1a, 1b:: eine Draufsicht bzw. einen Längsschnitt durch ein Rotorblatt, das eine Ausführungsform der erfindungsgemäßen Oberfläche aufweist,
- Fig. 2a, 2b:: eine Draufsicht und einen Querschnitt durch eine zweite Ausführungsform der Oberfläche,
- Fig. 3a, 3b:: eine Draufsicht und einen Querschnitt einer erfindungsgemäßen Oberfläche nach einem dritten Ausführungsbeispiel,
- Fig. 4a, 4b:: einen Längsschnitt und einen Querschnitt einer erfindungsgemäßen Oberfläche gemäß einer vierten Ausführungsform,
- Fig. 5:: einen Längsschnitt durch eine erfindungsgemäße Oberfläche gemäß einer fünften Ausführungsform und
- Fig. 6-8:: Draufsichten auf weitere Ausführungsformen der erfindungsgemäßen Oberfläche.
Im Ausführungsbeispiel gemäß der Fig. 1a und 1b ist ein an sich bekannter Art und Weise ausgebildetes Rotorblatt 10 dargestellt. Beidseitig weist diese eine Oberfläche 12 auf, die Erhebungen 14 aufweist, welche aus der Grundfläche 16 vorstehen. Die Erhebungen 14 sind in Draufsicht auf die Oberfläche jeweils von zwei Begrenzungslinien 18 und 20 umrandet. Die Begrenzungslinie 20 verläuft gerade, während die Begrenzungslinie 18 eine nach außen gewölbte Krümmung aufweist. Insgesamt umranden die Begrenzungslinien 18 und 20 die Erhebung 14 derart, daß sich die Querschnittsfläche eines Tragflügels ergibt, wie aus Fig. 1a deutlich ersichtlich. Diese Form ist für die Erhebungen 14 charakteristisch. Im Ausführungsbeispiel gemäß Fig. 1a sind die geraden Begrenzungslinien 20 senkrecht zum vorderen Begrenzungsrand 22 des Rotorblatts 10 ausgerichtet. Die Senkrechtlinie 20 kann aber auch in einem Winkel zu dem Rotorblatt angestellt sein.

Die Begrenzungslinien größerer Krümmung 18 sind jeweils zum freien Ende des Rotorblatts hin gerichtet, wie sich das ebenfalls aus der Fig. 1a ergibt. Die Oberfläche, wie sie in den Fig. 1a und 1b dargestellt ist, kann nicht nur auf einem ebenen Rotorblatt, wie hier dargestellt, sondern auch auf einem gewellten Rotorblatt entsprechend der DE 90 13 099 U ausgebildet sein. Wie hier exemplarisch anhand eines Rotorblatts erläuterte erfindungsgemäße Oberfläche kann auch auf einem anderen umströmten Körper aufgebracht sein.

Die Fig. 2a und 2b zeigen eine weitere Ausführungsform der erfindungsgemäßen Oberfläche. Hier sind die Erhebungen 14 in Reihen 24 bzw. 26 hintereinander angeordnet. Mehrere Reihen 24 und 26 liegen auf der Oberfläche parallel nebeneinander. Die nebeneinander liegenden Reihen 24 und 26 sind so angeordnet, daß jeweils einer Begrenzungslinie 18 mit größerer Krümmung eine gerade Begrenzungslinie 20 der nächstfolgenden Erhebung gegenüberliegt. Gemäß diesem Beispiel sind die Reihen 24 und 26 der Erhebungen gegeneinander versetzt, so daß sich die Erhebungen 14 von zwei benachbarten Reihen nicht genau sondern versetzt gegenüberliegen. Der Fig. 2b ist zu entnehmen, daß die Erhebungen der Reihen 24 bzw. 26 unterschiedliche Höhe aufweisen. Die Erhebungen 14 sind zu ihrem von der Grundfläche wegweisenden Ende hin ebenfalls gekrümmt, wie sich beispielsweise aus der Fig. 2b ergibt.

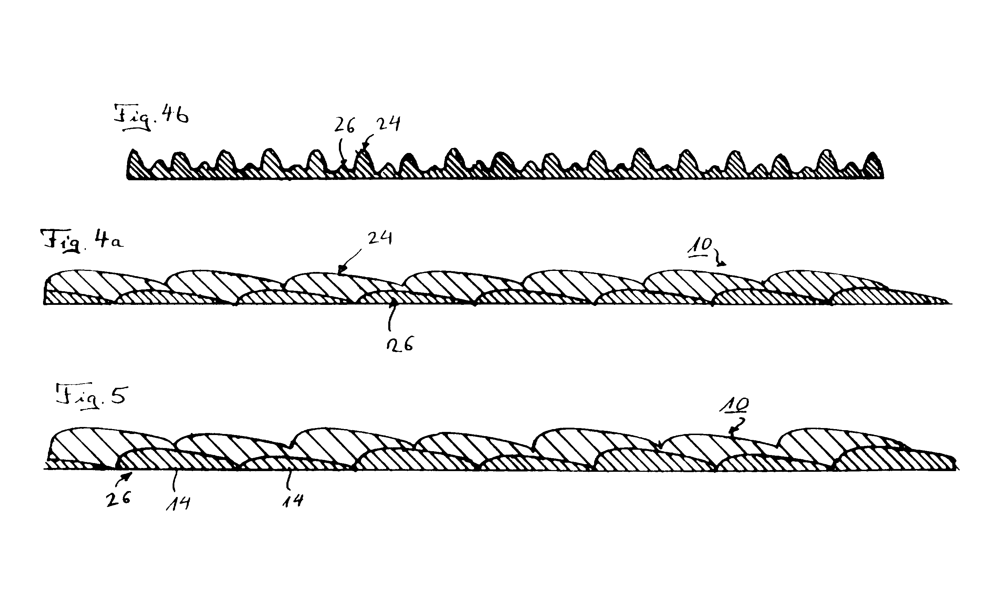

Dieser Höhenunterschied zwischen Reihen 24 und 26 ist noch deutlicher im Ausführungsbeispiel gemäß der Schnittdarstellungen 4a und 4b gezeigt. Das Ausführungsbeispiel gemäß der Schnittdarstellung nach Fig. 5 unterscheidet sich von dem Ausführungsbeispiel nach den Fig. 4a und 4b dadurch, daß hintereinander angeordnete Erhebungen 14 der Reihe 26 verschieden hoch sind.

Gemäß der Fig. 3a und 3b ist angedeutet, daß die Oberfläche 10 erste vergleichsweise hohe Erhebungen 14' aufweist, die eine Grobstruktur bilden. Auf dieser Grobstruktur sind wiederum vergleichsweise niedrige Erhebungen 14'' ausgebildet, die eine die Grobstruktur überlagernde Feinstruktur bilden.

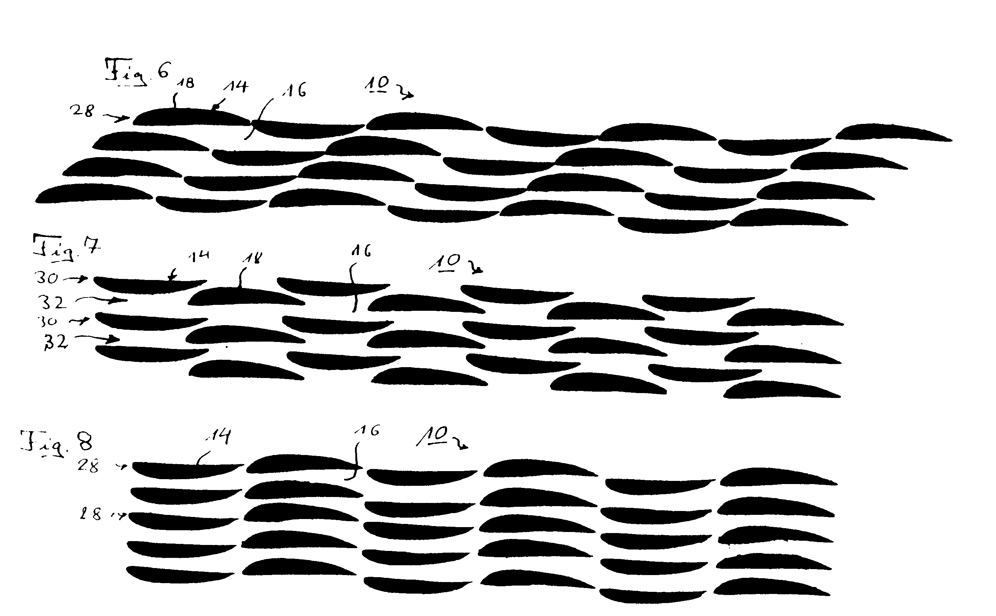

In Fig. 6 ist eine Ausführungsform der Oberfläche 10 dargestellt, bei der die Erhebungen 14 hintereinander derart angeordnet sind, daß ihre Begrenzungslinie mit größerer Krümmung 18 jeweils alternierend in eine jeweils entgegengesetzte Richtung ausgerichtet ist. Mehrere Reihen 28 sind nebeneinander versetzt zueinander angeordnet, wie in Fig. 6 dargestellt.

In Fig. 7 sind aus den Erhebungen 14 jeweils Reihen 30 und 32 gebildet, die jeweils alternierend angeordnet sind. Die einzelnen Reihen 30 und 32 bestehen aus Erhebungen 14, die nicht unmittelbar hintereinander angeordnet sind, sondern jeweils einen Zwischenraum zwischen sich freilassen. In diesem Zwischenraum liegt dann die nächstfolgende Reihe 32 von Erhebungen 14, wobei die Begrenzungslinie größerer Krümmung 18 jeweils in Richtung der Lücke zwischen den Erhebungen 14 der benachbarten Reihe 30 ausgerichtet ist.

Die Oberfläche 10 gemäß der Ausführungsform nach Fig. 8 entspricht weitestgehend der Oberfläche nach dem Ausführungsbeispiel gemäß Fig. 6. Sie weist allerdings den Unterschied auf, daß die nebeneinander angeordneten Reihen 28 nicht gegeneinander versetzt sind.

## Patentansprüche

1. Oberfläche eines fluidumströmten Körpers mit aus der Grundfläche (16) vorstehenden Erhebungen (14)
**dadurch gekennzeichnet,**
daß die Erhebungen (14) in Draufsicht auf die Oberfläche (12) jeweils von zwei Begrenzungslinien (18, 20) umrandet sind, von denen die eine Begrenzungslinie (18) länger ist und eine größere Krümmung aufweist als die andere Begrenzungslinie (20) wobei die Begrenzungslinien (18, 20) die Erhebungen derart umranden, daß sich die Querschnittsfläche eines Tragflügels ergibt.

2. Oberfläche eines fluidumströmten Körpers nach Anspruch 1,
dadurch gekennzeichnet, daß die Erhebungen (14) derart nebeneinander angeordnet sind, daß jeweils neben einer Begrenzungslinie mit größerer Krümmung einer Erhebung (14) eine Begrenzungslinie mit kleinerer Krümmung einer folgenden Erhebung (14) liegt.

3. Oberfläche eines fluidumströmten Körpers nach Anspruch 1 oder 2, dadurch gekennzeichnet, daß mehrere Erhebungen (14) hintereinander in Reihe (24, 26) angeordnet sind und daß mehrere Reihen von Erhebungen nebeneinander liegen.

4. Oberfläche eines fluidumströmten Körpers nach Anspruch 3, dadurch gekennzeichnet, daß in den durch die Erhebungen (14) gebildeten Reihen (24, 26) die jeweilige Begrenzungslinie mit größerer Krümmung der hintereinander liegenden Erhebungen in eine Richtung gerichtet ist.

5. Oberfläche eines fluidumströmten Körpers nach Anspruch 3, dadurch gekennzeichnet, daß die Begrenzungslinie (18) mit größerer Krümmung der hintereinander angeordneten Erhebungen jeweils abwechselnd in entgegengesetzte Richtungen weisen.

6. Oberfläche eines fluidumströmten Körpers nach einem der Ansprüche 1-5, dadurch gekennzeichnet, daß die Höhe der Erhebungen (14) bei nebeneinander angeordneten Reihen (28, 26) von Erhebungen unterschiedlich ist.

7. Oberfläche eines fluidumströmten Körpers nach einem der Ansprüche 1-6, dadurch gekennzeichnet, daß die Höhe der Erhebungen (14) von hintereinander angeordneten Erhebungen unterschiedlich ist.

8. Oberfläche eines fluidumströmten Körpers nach einem der Ansprüche 1-7, dadurch gekennzeichnet, daß die Erhebungen (14) zu ihrem von der Grundfläche (16) wegweisenden Ende hin ebenfalls gekrümmt sind.

9. Oberfläche eines fluidumströmten Körpers nach einem der Ansprüche 1-7, dadurch gekennzeichnet, daß die Oberfläche der Erhebungen (14), die der Grundfläche (16) gegenüberliegt, parallel zur Grundfläche verläuft oder schräg zur Grundfläche (16) angestellt ist, während die seitlichen Begrenzungsflächen der Erhebungen jeweils senkrecht zur Grundfläche ausgerichtet sind.

10. Oberfläche eines fluidumströmten Körpers nach einem der Ansprüche 1-9, dadurch gekennzeichnet, daß die Oberfläche erste vergleichsweise hohe Erhebungen (14) aufweist, die eine Grobstruktur bilden, und daß auf dieser Grobstruktur wiederum vergleichsweise niedrige Erhebungen (14) ausgebildet sind, die eine Feinstruktur bilden.

## Claims

1. Surface of a body immersed in a fluid flow with raised areas (14) standing proud from the base surface (16)
**characterised in that**
the raised areas (14) as seen from above, in a plan view onto the surface (12) are each enclosed by two boundary lines (18, 20) of which one boundary line (18) is longer and exhibits a greater curvature than the other boundary line (20), said boundary lines (18, 20) enclosing the raised areas such that the cross sectional area of an aerofoil is produced.

2. Surface of a body immersed in a fluid according to Claim 1, characterised in that the raised areas (14) are arranged next to one another such that, in each case, there is located next to a boundary line with a greater curvature of a raised area (14) a boundary line with a smaller curvature of a following raised area (14).

3. Surface of a body immersed in a fluid according to Claim 1 or 2, characterised in that several raised areas (14) are arranged in a row (24, 26) one behind the other and that several rows of raised areas are located adjacent to one another.

4. Surface of a body immersed in a fluid according to Claim 3, characterised in that, in the rows (24, 26) formed by the raised areas (14), the boundary lines (18) with the greater curvature of the raised areas located one behind the other each point in the same direction.

5. Surface of a body immersed in a fluid according to Claim 3, characterised in that the boundary lines (18) with the greater curvature of the raised areas arranged one behind the other alternately point in opposite directions.

6. Surface of a body immersed in a fluid according to one of Claims 1 - 5, characterised in that the heights of the raised areas (14) in rows (24, 26) of raised areas arranged adjacent to one another are different.

7. Surface of a body immersed in a fluid according to one of Claims 1 - 6, characterised in that the heights of the raised areas (14) arranged one behind the other are different.

8. Surface of a body immersed in a fluid according to one of Claims 1 - 7, characterised in that the raised areas (14) are likewise curved towards their end pointing away from the base surface (16).

9. Surface of a body immersed in a fluid according to one of Claims 1 - 7, characterised in that the surface of the raised areas (14) located opposite the base surface (16) runs parallel to said base surface or is inclined to said base surface (16), while the lateral boundary surfaces of the raised areas are each arranged vertical to said base surface.

10. Surface of a body immersed in a fluid according to one of Claims 1 - 9, characterised in that the surface exhibits initial, relatively high raised areas (14) which form a rough structure, and that formed on this rough structure are further, relatively small raised areas (14) which form a fine structure.

## Revendications

1. Surface d'un corps autour duquel s'écoule un fluide comportant des élévations (14) dépassant une surface de fond (16)
caractérisée en ce que
les élévations (14) sont chacune bordées, en vue d'en haut sur la surface (12), de deux lignes de délimitation (18, 20), dont l'une des lignes de délimitation (18) est plus longue et présente une courbure plus grande que l'autre ligne de délimitation (20), les lignes de délimitation (18, 20) bordant les élévations de manière à ce que la surface transversale d'une aile portante en résulte.

2. Surface d'un corps autour duquel s'écoule un fluide selon la revendication 1, caractérisée en ce que les élévations (14) sont disposées l'une à côté de l'autre de manière à ce que dans chaque cas, se trouve à côté d'une ligne de délimitation présentant une courbure plus grande d'une élévation (14) une ligne de délimitation présentant une courbure plus petite d'une élévation (14) successive.

3. Surface d'un corps autour duquel s'écoule un fluide selon les revendications 1 ou 2, caractérisée en ce que plusieurs élévations (14) sont disposées (24, 26) l'une derrière l'autre en rangées et que plusieurs rangées d'élévations sont juxtaposées.

4. Surface d'un corps autour duquel s'écoule un fluide selon la revendication 3, caractérisée en ce que dans les rangées (24, 26) formées par les élévations (14), chaque ligne de délimitation, présentant une courbure plus grande des élévations qui sont disposées l'une derrière l'autre, est orientée dans une direction.

5. Surface d'un corps autour duquel s'écoule un fluide selon la revendication 3, caractérisée en ce que les lignes de délimitation (18) présentant une courbure plus grande des élévations qui sont disposées l'une derrière l'autre sont orientées en alternance en directions opposées.

6. Surface d'un corps autour duquel s'écoule un fluide selon l'une quelconque des revendications 1 à 5, caractérisée en ce que les hauteurs des élévations (14) de rangées (24, 26) juxtaposées d'élévations sont différentes.

7. Surface d'un corps autour duquel s'écoule un fluide selon l'une quelconque des revendications 1 à 6, caractérisée en ce que les hauteurs des élévations (14) disposées l'une derrière l'autre sont différentes.

8. Surface d'un corps autour duquel s'écoule un fluide selon l'une quelconque des revendications 1 à 7, caractérisée en ce que les élévations (14) sont également courbées vers leur extrémité détournée de la surface de fond (16).

9. Surface d'un corps autour duquel s'écoule un fluide selon l'une quelconque des revendications 1 à 7, caractérisée en ce que la surface des élévations (14) qui se trouve en face de la surface de fond (16) s'étend parallèlement à la surface de fond ou est inclinée obliquement par rapport à la surface de fond (16) alors que les surfaces de délimitation latérales des élévations sont chacune orientées perpendiculairement par rapport à la surface de fond.

10. Surface d'un corps autour duquel s'écoule un fluide selon l'une quelconque des revendications 1 à 9, caractérisée en ce que la surface présente de premières élévations (14) relativement élevées qui forment une structure grossière et que sur cette structure grossière, des élévations (14) relativement basses sont formées, qui forment une structure fine.
